# EUROPÄISCHE PATENTSCHRIFT

(11) **EP 0 659 587 B1**
(45) Veröffentlichungstag und Bekanntmachung des Hinweises auf die Patenterteilung: **05.04.2000**
(21) Anmeldenummer: 94120570.0
(22) Anmeldetag: 23.12.1994
(51) Int. Cl.: B42D 15/00

(54) **Sicherheitspapier mit einem faden- oder bandförmigen Sicherheitselement**
Security paper with a formed thread or band security element
Papier de sécurité avec élément de sécurité en forme de fil ou de bande

(30) Priorität: 24.12.1993 DE 4344553
(43) Veröffentlichungstag der Anmeldung: 28.06.1995
(60) Teilanmeldung: 99106260.5
(73) Patentinhaber: Giesecke & Devrient GmbH, 81677 München (DE)
(72) Erfinder: Burchard, Theo, Dr., D-83703 Gmund/Tegernsee (DE); Schmitz, Christian, D-83730 Fischbachau (DE); Böhm, Michael, D-85551 Kirchheim (DE)
(74) Vertreter: Klunker . Schmitt-Nilson . Hirsch

(56) Entgegenhaltungen:
- EP-A- 0 059 056
- WO-A-89/08166

## Beschreibung

Die Erfindung betrifft ein Sicherheitspapier mit einem Sicherheitselement in Form eines Fadens oder Bandes, das aus einer lichtdurchlässigen Kunststoffolie mit zumindest teilweise opaker Beschichtung besteht, wobei die Beschichtung lichtdurchlässige Bereiche in Form von visuell und/oder maschinell lesbaren Zeichen oder Mustern aufweist, die eine erste Information bilden.

Banknoten und andere geldwerte Papiere wie Schecks, Aktien, Reiseschecks, Scheck- und Kreditkarten, aber auch Pässe und Identitätskarten werden häufig durch Einfügen oder Aufbringen von sogenannten Sicherheitsfäden gegen Fälschungen abgesichert. Papiere dieser Art sollen im folgenden als Sicherheitspapiere bezeichnet werden. Die hierfür verwendeten Sicherheitsfäden bestehen aus verschiedensten Materialien in Form von Fäden oder Bändern mit einer Breite von 0,4 bis 10 mm. Sie bestehen vorwiegend aus Kunststoffolien, welche metallisch beschichtet, bedruckt, eingefärbt oder auch z. B. mit pigmentförmigen Substanzen versehen sind. Darüber hinaus ist es auch bekannt, den Sicherheitsfäden durch Auswahl entsprechender Substanzen magnetische, fluoreszierende, röntgenabsorbierende oder andere Eigenschaften zu verleihen.

Metallisch beschichtete Fäden werden in jüngster Zeit in zunehmenden Maße für Sicherheitspapiere eingesetzt. Diese Fäden, die teilweise oder ganz im Inneren des Papiers angeordnet werden, sind im auffallenden Licht nahezu unsichtbar. Denn die durch die obere Papierschicht dringenden Lichtstrahlen werden an der metallischen Oberfläche vollständig reflektiert und im Papier diffus gestreut. Im Durchlicht erscheinen derartige Fäden hingegen als schwarze Streifen, die sich von ihrer Umgebung deutlich abheben. Fäden dieser Art können durch einen Aufdruck auf das Papier nicht imitiert werden. Zur weiteren Erhöhung der Fälschungssicherheit wurde auch bereits vorgeschlagen, derartige aluminiumbedampfte Sicherheitsfäden mit einer Mikroschrift zu versehen (DE-OS 14 46 851). Dies hat sich aber in der Praxis als wenig sinnvoll herausgestellt, da diese Schrift auf dem sonst undurchsichtigen Sicherheitsfaden im Durchlicht nicht und im Auflicht nur sehr schwer erkennbar ist. Selbst wenn derartige Sicherheitsfäden, wie in der EP-PS 0 059 056 beschrieben, als sogenannte Fensterfäden in das Papier eingebracht werden, bleibt der Mikrodruck im bedruckten Papier schwer auffindbar.

Aus der EP-OS 0 279 880 ist ein Sicherheitsfaden aus transparentem Folienmaterial bekannt, auf welchem metallisch glänzende Mikroschriftzeichen vorgesehen sind. Die Mikroschriftzeichen sind wegen der Einbettung des Fadens in der Banknote im Auflicht nicht erkennbar. Im Durchlicht hingegen sind ausschließlich nur die Schriftzeichen erkennbar, da der Sicherheitsfaden selbst transparent ausgeführt ist. Dem Betrachter zeigt sich also im Durchlicht nur noch ein die Banknote durchziehender Schriftzug, der wegen der Kleinheit der Schriftzeichen, seiner Einbettung in die Papiermasse und eventuell einem darüberliegenden Druckbild nur schwer auffindbar ist. Die Nachahmung eines solchen Fadens ist dagegen wegen der geringen Größe der Mikroschriftzeichen erschwert.

Bei einem weiteren aus der EP-OS 0 330 733 bekannten Sicherheitsfaden wird eine lichtdurchlässige Kunststofffolie, die farbig ausgeführt sein kann, mit einer vollflächigen opaken, insbesondere metallischen Beschichtung versehen, in der Aussparungen in Form von Zeichen oder Mustern erzeugt werden. Der Faden ist im Durchlicht als dunkler Streifen im Dokument erkennbar, während sich die Schriftzeichen und Muster gegenüber ihrer direkten Umgebung, der opaken Fadenbeschichtung, und zusätzlich gegenüber der weiteren Umgebung, dem Dokumentenmaterial, als helle, eventuell farbige Flächen gut erkennbar abheben. Der Faden ist damit im Dokument sehr gut auffindbar während die Schriftzeichen bei entsprechender Größe jederzeit auch ohne Hilfsmittel lesbar sind.

Die Herstellung metallisierter Sicherheitsfäden erfolgt durch großflächiges Bedampfen einer transparenten Folie mit einer dünnen Metallschicht, z. B. aus Aluminium. Zur Erzeugung metallischer Schriftzeichen wird die bedampfte Folie gemäß dem in der EP-OS 0 279 880 beschriebenen Verfahren unter Verwendung einer säurefesten Druckfarbe mit den Mikroschriftzeichen bedruckt und anschließend einem Ätzprozeß unterworfen, in dem die nicht bedruckten Bereiche entfernt werden, so daß die metallischen Schriftzeichen auf der transparenten Folie übrigbleiben.

Die Erzeugung zeichenförmiger Aussparungen in der Beschichtung der Folie kann beispielsweise, wie in der EP-OS 0 330 733 beschrieben, nach einem Waschverfahren erfolgen, bei dem die Zeichen vor dem Bedampfen mit einer löslichen Farbe auf die Folie gedruckt werden. Nach dem Beschichtungsvorgang wird die lösliche Farbe sowie die darüberliegende Metallschicht in einem geeigneten Lösungsmittelbad entfernt.

Der Erfindung liegt nun die Aufgabe zugrunde, ein Sicherheitspapier mit einem faden- oder bandförmigen Sicherheitselement herzustellen, das einen hohen Fälschungsschutz bietet, gleichzeitig aber eine gute Erkennbarkeit des Sicherheitselements sowie der Zeichen ohne technische Hilfsmittel gewährleistet.

Diese Aufgabe wird durch die im Kennzeichen der Ansprüche 1 und 7 genannten Merkmale gelöst. Weiterbildungen der Erfindung sind Gegenstand unter- geordneter Ansprüche.

Die Erfindung ist im wesentlichen dadurch gekennzeichnet, auf einem Sicherheitsfaden wenigstens zwei Arten von Informationen vorzusehen, die auf dem Faden nebeneinander angeordnet oder auf andere Weise miteinander kombiniert, eine hohe Fälschungssicherheit des Fadens und damit auch des Sicherheitspapieres bei gleichzeitig guter Erkennbarkeit gewährleisten.

In einer ersten Ausführungsform weist das erfindungsgemäße Sicherheitspapier einen Sicherheitsfaden aus transparentem Kunststoff auf, der in voneinander beabstandeten Bereichen eine sogenannte Negativschrift trägt, d. h. eine opake, insbesondere metallische, Beschichtung mit Aussparungen in Form von Zeichen oder Mustern.

Dieser Faden wird vorzugsweise als Fensterfaden in das Papier eingebracht. Die Negativschrift bietet aufgrund des bereits geschilderten Auflicht-/Durchlicht-Effekts im Papier einen guten Kopierschutz, da dieses Verhalten weder mit einem Kopiergerät, noch mit einem Aufdruck imitiert werden kann. Zusätzlich ermöglichen die opaken Bereiche eine einfache Lokalisierung des Fadens im Dokument, da sie einen guten Kontrast zur Umgebung bieten.

Inbesondere bei der metallischen Negativschrift wird der optische Eindruck in erster Linie durch den metallischen Glanz des Fadens beherrscht, so daß die Aussparungen und die hiermit dargestellten Informationen in den Hintergrund rücken.

Die Negativschrift wird beispielsweise mittels eines Waschverfahrens erzeugt, wie es aus der EP-OS 0 330 733 bekannt ist. Hierbei wird zunächst auf eine Folie das Druckbild aufgedruckt, wie es später in der opaken Beschichtung als Negativbild erscheinen soll, und erst in einem zweiten Verfahrensschritt wird die opake Beschichtung, z. B. eine Metallbeschichtung, aufgebracht. Für die Aufbringung des Druckbildes werden dabei Druckfarben oder Lacke verwendet, die entweder zur Folie und/oder zu der Beschichtung eine geringe Haftung aufweisen, so daß entweder die Beschichtung alleine oder zusammen mit der Druckfarbe entfernt werden kann. Vorzugsweise werden Druckfarben verwendet, die sich unter der Metallbeschichtung wieder chemisch lösen lassen. Bei dem nach der Beschichtung erfolgenden Waschvorgang wird nur die lösliche Farbe entfernt.

Der Hintergrund der Negativschrift kann jedoch auch gedruckt werden, z. B. mit einer metallischen Druckfarbe.

Der Schutzeffekt wird in einer bevorzugten Ausführungsform genutzt, bei der auf einem transparenten Kunststoffaden benachbarte Bereiche mit groß ausgeführter, gut lesbarer sowie mit kleiner, visuell schwer auflösbarer Negativschrift vorgesehen sind. "Groß" bezeichnet in diesem Zusammenhang eine Schrifthöhe von mindestens 1 mm und eine Strichbreite von wenigstens 150 µm, "klein" die entsprechend darunterliegenden Werte.

Werden die Aussparungen der Negativschrift zu groß gewählt, so verbessert dies zwar die Leserlichkeit, verschlechtert aber andererseits den Auflicht-/Durchlicht-Effekt. Das Sicherheitselement gemäß der Erfindung bietet nun durch die Kombination von kleiner und großer Negativschrift den Vorteil guter Lesbarkeit unter gleichzeitiger Beibehaltung hoher Fälschungssicherheit. Durch die auch im Auflicht erkennbaren großen Zeichen werden darüber hinaus Fälschungen vermieden, die lediglich den metallischen Glanzeffekt imitieren.

Als opake Beschichtungsmaterialien eignen sich neben Metallschichten auch andere bei Betrachtung im Durchlicht zur Umgebung farblich und/oder im Grauton kontrastierende nichtmetallische Schichten, wie z. B deckende, vorzugsweise weiße Farbschichten, metallisch glänzende Schichten, wie z. B. Titannitrid oder Interferenzschichten, wie sie beispielsweise aus der US-PS 3,858,977 bekannt sind.

Ebenso kann das Kunststoffsubstrat mit nichtdeckenden, vorzugsweise lasierenden Druckfarben in verschiedenen Farben und Tönungen versehen werden. Die Folie kann jedoch auch mit entsprechenden Farbmitteln so eingefärbt werden, daß in einem Teilbereich des visuell zugänglichen Spektrums die Transparenz erhalten bleibt. Durch Verwendung lumineszierender Farben kann der visuelle Eindruck des Fadenmaterials noch weiter verbessert und effektvoller ausgeführt werden. Die Lumineszenzfarben können entweder im nicht angeregten Zustand farblos sein oder eine Körperfarbe besitzen, die sich vorzugsweise von der Farbe des Emissionslichts unterscheidet. Die Schriftzeichen oder Muster erscheinen dann erst im Anregungslicht farbig bzw. wechseln ihre Farbe, wenn der Faden, z. B. unter UV-Licht, betrachtet wird. Mehrere in unterschiedlichen Farben emittierende Lumineszenzstoffe erhöhen sowohl die gestalterischen Möglichkeiten als auch die Fälschungssicherheit, da zur exakten Nachahmung die Analyse jedes einzelnen Lumineszenzstoffs notwendig ist. Diese Analyse kann in einfacher Weise noch weiter erschwert werden, in dem die verschiedenen Lumineszenzfarben gemischt oder überlappend aufgedruckt werden.

Weitere vorteilhafte Ausführungsformen werden anhand der Figuren erläutert. Zur besseren Anschaulichkeit wird in den Figuren auf eine maßstabs- und proportionsgetreue Darstellung verzichtet.

Die Figuren zeigen:
- Fig. 1: Sicherheitsdokument gemäß der Erfindung,
- Fig. 2 - 5: verschiedene Varianten einer bevorzugten Ausführungsform des erfindungsgemäßen Sicherheitselements.

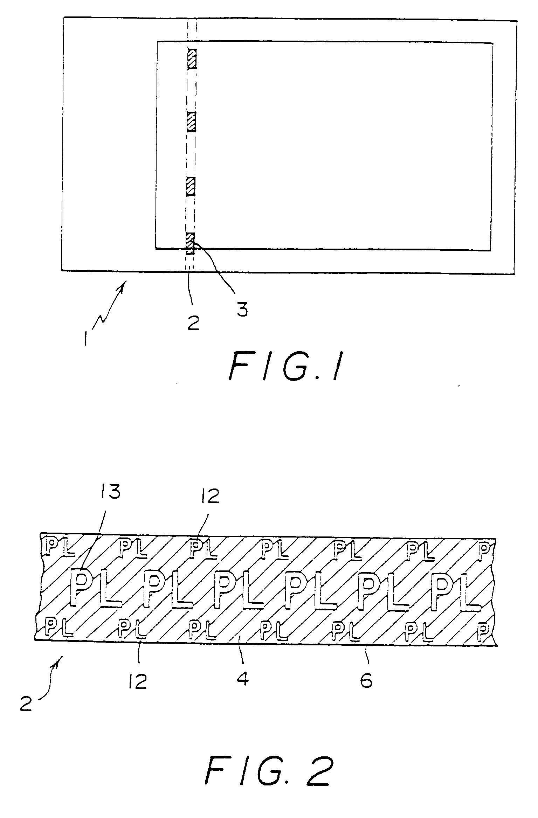

Fig. 1 zeigt ein erfindungsgemäßes Sicherheitsdokument, hier eine Banknote 1, in welche ein Fenstersicherheitsfaden 2 eingebettet ist, der in bestimmten Bereichen 3 direkt an die Dokumentenoberfläche tritt. Es ist jedoch ebenso möglich, den Faden je nach Breite und gewünschtem Effekt vollständig in das Dokument einzubetten oder so in dem Dokument zu verankern, daß er als über die gesamte Breite des Dokuments sichtbarer Streifen erscheint. Im folgenden werden die verschiedenen Ausführungsvarianten des Sicherheitselements 2 näher erläutert.

In Fig. 2 ist eine der bevorzugten Ausführungsformen des erfindungsgemäßen Sicherheitselements 2 dargestellt. Es besteht aus einer transparenten Kunststoffschicht 6, die in Teilbereichen mit einer metallischen Beschichtung 4 versehen ist, die Aussparungen in Form von Zeichen oder Mustern aufweist. Diese Informationen werden erfindungsgemäß mehrmals und in abwechselnder Reihenfolge längs des Fadens aufgebracht.

Insbesondere bei breiten Fäden (ab etwa 4 mm) können die Zeichen auch quer zur Laufrichtung des Fadens angeordnet sein. Dies erhöht die Lesbarkeit der Zeichen in den Fensterbereichen und deren Fälschungssicherheit, da je nach Schrifthöhe eine bestimmte Anzahl an Rapporten pro Fenster sichtbar ist und dieses Erscheinungsbild nur mit hohem Aufwand imitiert werden kann.

Die Folie kann eine Eigenfarbe aufweisen oder mit einer transluzenten Grundfarbschicht bedruckt sein, die eventuell zusätzlich mit Lumineszenzstoffen versetzt ist.

Die Folie wird in Streifen gewünschter Breite, z. B. 2 mm, geschnitten und auf Rollen gelagert, bis sie in das Dokumentenmaterial eingebracht wird. Das Fadenmaterial wird während der Papierherstellung an das Papiersieb herangeführt und dort in die sich bildende Papierbabn vorzugsweise als Fensterfaden eingewebt. Die übrigen dargestellten Fadenvarianten werden nach analogen Verfahren hergestellt.

Eine Ausführungsform des erfindungsgemäßen Sicherheitselements 2 zeigt Fig. 2. Gemäß Fig. 2 befinden sich symmetrisch zur Fadenmitte in den Randbereichen, bezogen auf die Fadenbreite, kleine, visuell im Auflicht schwer erkennbare Negativzeichen 12, während die relativ groß ausgeführten, gut leserlichen Negativzeichen 13 mittig plaziert sind. Bei einer Fadenbreite von 4 mm kann die Schrifthöhe dieser großen Zeichen z. B. 1,5 mm betragen bei einer Strichbreite von ca. 300 µ, während die kleine Schrift in den Randbereichen eine Schrifthöhe von ca. 0,75 mm und eine Strichbreite von ca. 100 µm aufweisen kann.

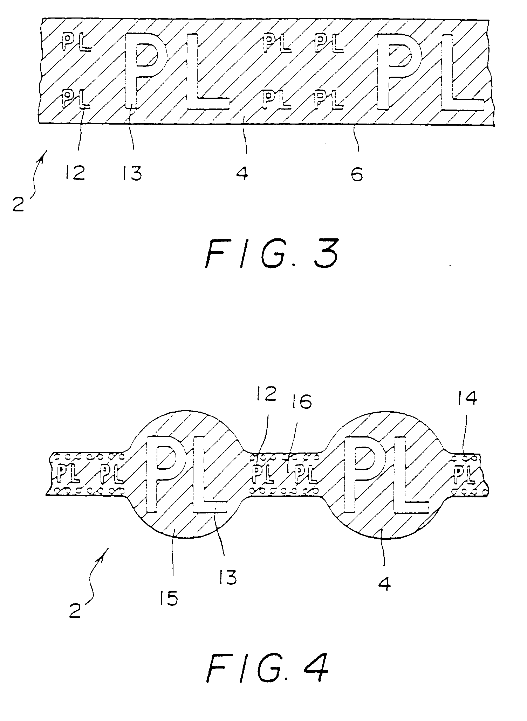

Die Bereiche mit kleinen und großen Negativzeichen 12, 13 können allerdings auch alternierend entlang der Laufrichtung des Fadens angeordnet sein, wie in Fig. 3 dargestellt.
In einer weiteren Variante kann zusätzlich zur Schriftgröße auch die Form des Fadens verändert werden. Eine mögliche Ausführungsform zeigt Fig. 4. Die Fadenbreite variiert hier periodisch in Laufrichtung gesehen. In den verbreiterten Bereichen 15 wird die große Schrift 13 angeordnet, während die kleine Schrift 12 sich in den schmäleren Stegbereichen 16 befindet. Die Stegbereiche 16 sind vorzugsweise in das Dokumentenmaterial eingebettet und sorgen somit für die nötige Verankerung im Dokument. Wahlweise können Sie zu diesem Zweck mit zusätzlichen Perforationen 14 versehen werden.

Die Herstellung dieser Fadenvarianten kann nach dem oben beschriebenen Waschverfahren erfolgen oder nach einem anderen bekannten Demetallisierungsverfahren, z. B. nach einem der in der EP-OS 0 330 733 beschriebenen Verfahren, auf die in diesem Zusammenhang ausdrücklich Bezug genommen wird. Ebenso ist es möglich, die Negativschrift mit metallpigmenthaltigen Druckfarben oder metallisch glänzenden Farben aufzudrucken.

Es können Strichstärken und Schrifthöhen sehr kleiner Dimensionen erzeugt werden, so daß sie für das Auge kaum mehr auflösbar sind. In diesem Fall kann die Überprüfung nurmehr maschinell erfolgen. Eine maschinelle Überprüfung ist allerdings auch bei allen anderen Fadenvarianten gemäß der Erfindung möglich.

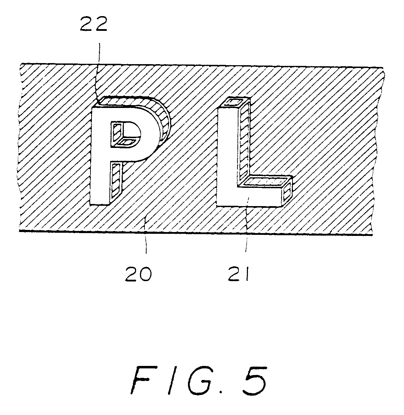

Bei allen oben beschrieben Ausführungsformen kann die Nachahmbarkeit des Schriftbildes noch weiter erhöht werden, wenn die aufgebrachten Informationen mit einem Schattenrand versehen werden, so daß der Eindruck von Dreidimensionalität entsteht. Fig. 5 zeigt eine entsprechende Ausführungsform. Aus Gründen der Anschaulichkeit wird hier lediglich ein eine Negativschrift aufweisender Bereich des erfindungsgemäßen Sicherheitsfadens stark vergrößert dargestellt. Um den visuellen Effekt dieser Variante zu verdeutlichen, wird die opake Hintergrundbeschichtung 20 in diesem Beispiel vollflächig dar gestellt und nicht schraffiert, wie in den vorhergehenden Figuren. Die metallische Beschichtung 20 weist in diesem Fall nicht nur im Bereich des Zeichens 21 eine Aussparung auf, sondern auch im Bereich 22. Durch die besondere Linienführung der Aussparungen 22, die den Umrißlinien eines Schattens entsprechend, entsteht der Eindruck, daß das Zeichen eine gewisse Tiefe besitzt. Derartige quasi dreidimensionale Zeichen oder Muster können sowohl nach dem beschriebenen Demetallisierungsverfahren als auch drucktechnisch erzeugt werden.

## Patentansprüche

1. Sicherheitspapier mit einem Sicherheitselement in Form eines Fadens oder Bandes, das aus einer lichtdurchlässigen Kunststoffolie mit zumindest teilweiser opaker Beschichtung besteht, wobei die Beschichtung lichtdurchlässige Bereiche in Form von visuell und/oder maschinell lesbaren Zeichen oder Mustern aufweist, die eine erste Information bilden, dadurch **gekennzeichnet**, daß die erste Information (13) ohne Hilfsmittel visuell erkennbar ist und daß die Beschichtung eine zweite Information (12) in Form von Zeichen oder Mustern aufweist, die ebenfalls durch Aussparungen in der opaken Beschichtung (4) gebildet werden, wobei die zweite Information aufgrund ihrer im Vergleich zur ersten Information geringeren Größe visuell schwerer auflösbar ist.

2. Sicherheitspapier nach Anspruch 1, dadurch **gekennzeichnet**, daß die erste und zweite Information (12,13) alternierend entlang des Sicherheitselements (2) angeordnet sind.

3. Sicherheitspapier nach wenigstens einem der Ansprüche 1 oder 2, dadurch **gekennzeichnet**, daß die erste und zweite Information (12, 13) entlang des Sicherheitselements (2) parallel zueinander angeordnet sind.

4. Sicherheitspapier nach wenigstens einem der Ansprüche 1 - 3, dadurch **gekennzeichnet**, daß die Breite des Sicherheitselements (2) in Laufrichtung gesehen variiert.

5. Sicherheitspapier nach wenigstens einem der Ansprüche 1 - 4, dadurch **gekennzeichnet**, daß die opake Beschichtung (4) ein metallisch wirkender Aufdruck oder eine Vakuummetallisierung ist.

6. Sicherheitspapier nach wenigstens einem der Ansprüche 1 - 5, dadurch **gekennzeichnet**, daß das Sicherheitselement (2) als Fensterfaden in das Sicherheitspapier eingebettet ist.

7. Sicherheitselement zur Einbettung in ein Sicherheitspapier in Form eines Fadens oder Bandes, das aus einer lichtdurchlässigen Kunststoffolie mit zumindest teilweiser opaker Beschichtung besteht, wobei die Beschichtung lichtdurchlässige Bereiche in Form von visuell und/oder maschinell lesbaren Zeichen oder Mustern aufweist, die eine erste Information bilden, dadurch **gekennzeichnet**, daß die erste Information (13) ohne Hilfsmittel visuell erkennbar ist und daß die Beschichtung eine zweite Information (12) in Form von Zeichen oder Mustern aufweist, die ebenfalls durch Aussparungen in der opaken Beschichtung (4) gebildet werden, wobei die zweite Information aufgrund ihrer im Vergleich zur ersten Information geringeren Größe visuell schwerer auflösbar ist.

## Claims

1. An antifalsification paper having a security element in the form of a thread or band which consists of a transparent plastic film with an at least partly opaque coating, the coating having transparent areas in the form of visually and/or machine readable characters or patterns which form a first information portion, characterized in that the first information portion (13) is visually recognizable without aids, and the coating has a second information portion (12) in the form of characters or patterns likewise formed by gaps in the opaque coating (4), the second information portion being harder to resolve visually due to its smaller size compared to the first information portion.

2. The antifalsification paper of claim 1, characterized in that the first and second information portions (12, 13) are disposed alternatingly along the security element (2).

3. The antifalsification paper of at least one of claims 1 and 2, characterized in that the first and second information portions (12, 13) are disposed parallel to each other along the security element (2).

4. The antifalsification paper of at least one of claims 1 to 3, characterized in that the width of the security element (2) is varied, regarded in the running direction.

5. The antifalsification paper of at least one of claims 1 to 4, characterized in that the opaque coating (4) is a metallic-looking print or a vacuum metalization.

6. The antifalsification paper of at least one of claims 1 to 5, characterized in that the security element (2) is embedded in said paper as a window thread.

7. A security element to be embedded in an antifalsification paper in the form of a thread or band which consists of a transparent plastic film with an at least partly opaque coating, the coating having transparent areas in the form of visually and/or machine readable characters or patterns which form a first information portion, characterized in that the first information portion (13) is visually recognizable without aids, and the coating has a second information portion (12) in the form of characters or patterns likewise formed by gaps in the opaque coating (4), the second information portion being harder to resolve visually due to its smaller size compared to the first information portion.

## Revendications

1. Papier de sécurité comportant un élément de sécurité sous la forme d'un fil ou d'une bande; constitué d'une feuille de matière synthétique transparente à la lumière, ayant au moins un revêtement partiellement opaque, le revêtement présentant des zones transparentes à la lumière sous la forme de caractères ou de motifs lisibles visuellement et/ou de façon automatique, qui constituent une première information, caractérisé en ce que la première information (13) est identifiable visuellement sans moyen auxiliaire, et en ce que le revêtment présente une deuxième information (12) sous la forme de symboles ou de motifs qui également sont constitués par des évidements ménagés dans le revêtement opaque (4), la deuxième information étant plus difficilement distinctible visuellement, du fait de sa plus faible taille, en comparaison de la première information.

2. Papier de sécurité selon la revendication 1, caractérisé en ce que la première et la deuxième information (12, 13) sont disposées de façon alternée le long de l'élément dc sécurité (2).

3. Papier de sécurité selon au moins l'une des revendications 1 ou 2, caractérisé en ce que la première et la deuxième information (12, 13) sont disposées parallèlement entre elles le long de l'élément de sécurité (2).

4. Papier de sécurité selon au moins l'une des revendications 1-3, caractérisé en ce que la largeur de l'élément de sécurité (2), observée dans la direction de défilement, est variable.

5. Papier de sécurité selon au moins l'une des revendication 1-4, caractérisé en ce que le revêtement opaque (4) est une impression à effet métallique ou bien une métallisation sous vide.

6. Papier de sécurité selon au moins l'une des revendications 1-5, caractérisé en ce que l'élément de sécurité (2) est noyé sous la forme d'un fil de fenêtre dans le papier de sécurité.

7. Elément de sécurité, destiné à être noyé dans un papier de sécurité, sous la forme d'un fil ou d'une bande qui est constitué d'une feuille en matière synthétique transparente à la lumière, avec un revêtement au moins partiellement opaque, le revêtement présentant des zones transparentes à la lumière sous la forme de caractères ou de motifs lisibles visuellement et/ou automatiquement, qui constituent une première information, caractérisé en ce que la première information (13) est identifiable visuellement, sans moyen auxiliaire, et en ce que le revêtement présente une deuxième information (12) sous la forme de symboles ou de motifs qui également dont constitués par des évidements ménagés dans le revêtement opaque (4), la deuxième information étant plus difficilement distinctible visuellement du fait de sa plus petite taille, en comparaison de la première information.
